# EUROPEAN PATENT APPLICATION

(11) **EP 4 648 153 A1**
(43) Date of publication of application: **12.11.2025**
(21) Application number: 25153172.9
(22) Date of filing: 21.01.2025
(51) Int. Cl.: H01M 10/04, H01M 50/553, H01M 50/566, H01M 50/176, H01M 50/184, H01M 50/188

(54) **INTEGRATED TERMINAL, SECONDARY BATTERY INCLUDING THE SAME, AND METHOD OF MANUFACTURING THE SAME**

(30) Priority: 09.05.2024 KR 20240061384
(71) Applicant: SAMSUNG SDI CO., LTD., Yongin-si, Gyeonggi-do 17084 (KR)
(72) Inventor: YOO, Seungyeol, Yongin-si, 17084 (KR); KIM, Heonhee, Yongin-si, 17084 (KR); CHOI, Jongnam, Yongin-si, 17084 (KR)
(74) Representative: Marks & Clerk LLP

(57) **Abstract**

Disclosed are an integrated terminal, a secondary battery including the same, and a method of manufacturing the same. The integrated terminal may include a terminal assembly including a terminal member disposed to adjoin a sub-plate electrically connected to an electrode assembly of a secondary battery and a terminal insulator surrounding a side of the terminal member and a cap insulator formed along a through hole in a cap plate coupled to a case accommodating the electrode assembly and in which the through hole into which the terminal assembly is inserted is formed. When the terminal assembly is inserted into the through hole, the terminal insulator and the cap insulator may adjoin one another. A welding groove may be formed in a portion at which the terminal insulator and the cap insulator adjoin each other. The terminal insulator and the cap insulator may be welded and coupled along the welding groove.

## Description

### FIELD

The present disclosure relates to an integrated terminal, a secondary battery including the same and a method of manufacturing the same, and to an integrated terminal that plays a role as a current collector and a terminal plate, a secondary battery including the same, and a method of manufacturing the same.

### BACKGROUND

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

In the electrode terminal, a direct-coupled terminal is made by using a method of welding a current collector and a terminal plate outside a cell by closely attaching the current collector and the terminal plate. In the direct-coupled terminal, an adhesive force between the current collector and the terminal plate is the most important factor in determining welding quality because a failure occurs in direct-coupled welding if the adhesion of the current collector and the terminal plate is not properly performed. However, in the direct-coupled terminal, it is difficult to check whether the current collector and the terminal plate have been properly closely attached on the outside after the terminal plate is inserted because the terminal plate is installed to cover the current collector. Accordingly, there is a problem in that the probability that a direct-coupled welding failure may occur is high if the current collector is tilted or inclined in a manufacturing process.

The above information disclosed in this Background section is for enhancement of understanding of the background of the present disclosure, and therefore, it may contain information that does not constitute related (or prior) art.

### SUMMARY

Embodiments are directed to providing an integrated terminal that plays a role as a current collector and a terminal plate, a secondary battery including the same, and a method of manufacturing the same.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

In embodiments, an integrated terminal includes a terminal assembly including a terminal member that is disposed to adjoin a sub-plate electrically connected to an electrode assembly of a secondary battery and a terminal insulator that surrounds a side of the terminal member, and a cap insulator formed along a through hole in a cap plate that is coupled to a case that accommodates the electrode assembly and in which the through hole into which the terminal assembly is inserted has been formed (e.g. is formed). When the terminal assembly is inserted into the through hole, the terminal insulator and the cap insulator adjoin one another (e.g. the terminal assembly is inserted into the through hole such that the terminal insulator and the cap insulator adjoin one another). A welding groove is formed in a portion at which the terminal insulator and the cap insulator adjoin one another. The terminal insulator and the cap insulator are welded and coupled along the welding groove.

In embodiments, the welding groove may be formed along an entire portion at which the terminal insulator and the cap insulator adjoin each other.

In embodiments, the welding groove may have a V shape.

In embodiments, the V shape of the welding groove may be formed to adjoin the terminal insulator and the cap insulator by forming a slope in one surface of at least one of the terminal insulator and the cap insulator.

In embodiments, the welding groove may have a U shape.

In embodiments, a protrusion portion may be formed in a side of the cap insulator. A recessed portion corresponding to the protrusion portion may be formed in a side of the terminal insulator that adjoins the side of the cap insulator in which the protrusion portion has been formed. In embodiments, the protrusion portion may have a hook shape.

In embodiments, the cap insulator may be formed in the cap plate through insert-molding.

In embodiments, the terminal insulator may be formed in the terminal member through insert-molding.

In embodiments, a secondary battery includes an electrode assembly, a case configured to accommodate the electrode assembly, a terminal assembly including a terminal member that is disposed to adjoin a sub-plate electrically connected to the electrode assembly and a terminal insulator that surrounds a side of the terminal member, a cap plate that is coupled to the case and in which a through hole into which the terminal assembly is inserted is formed, and a cap insulator formed along the through hole. When the terminal assembly is inserted into the through hole, the terminal insulator and the cap insulator adjoin each other (e.g. the terminal assembly is inserted into the through hole such that the terminal insulator and the cap insulator adjoin one another). A welding groove is formed in a portion at which the terminal insulator and the cap insulator adjoin one another. The terminal insulator and the cap insulator are welded and coupled along the welding groove.

In embodiments, the welding groove may be formed along an entire portion at the terminal insulator and the cap insulator adjoin each other.

In embodiments, the welding groove may have a V shape.

In embodiments, the V shape of the welding groove may be formed to adjoin the terminal insulator and the cap insulator by forming a slope in one surface of at least one of the terminal insulator and the cap insulator.

In embodiments, the welding groove may have a U shape.

In embodiments, a protrusion portion may be formed in a side of the cap insulator. A recessed portion corresponding to the protrusion portion may be formed in a side of the terminal insulator that adjoins the side of the cap insulator in which the protrusion portion has been formed. In embodiments, the protrusion portion may have a hook shape.

In embodiments, the terminal assembly may include a first terminal assembly and a second terminal assembly. The first terminal assembly and the second terminal assembly may be disposed toward the cap plate.

In embodiments, the terminal assembly may include a first terminal assembly and a second terminal assembly. The first terminal assembly may be disposed toward the cap plate, and the second terminal assembly may be disposed toward the cap plate disposed to be opposite to the cap plate.

In embodiments, a method of manufacturing a secondary battery includes manufacturing an electrode assembly, manufacturing a terminal assembly including a terminal member that is disposed to adjoin a sub-plate electrically connected to the electrode assembly and a terminal insulator that surrounds a side of the terminal member, manufacturing a cap plate in which a through hole into which the terminal assembly is inserted is formed and which includes a cap insulator formed along the through hole, inserting the terminal assembly into the through hole so that the terminal insulator and the cap insulator adjoin one another, and performing welding along a welding groove formed in a portion at which the terminal insulator and the cap insulator adjoin one another so that the terminal insulator and the cap insulator are coupled.

In embodiments, the method may further include coupling the cap plate to a case that accommodates the electrode assembly.

At least some of the above and other features of the invention are set out in the claims.

According to embodiments of the present disclosure, the occurrence of a welding failure attributable to a reduction of an adhesive force of a conventional direct-coupled terminal can be prevented because the coupling part of the terminal insulator that surrounds the side of the terminal member and the cap insulator that is formed along the through hole of the cap plate is exposed to the outside. According to embodiments of the present disclosure, a bonding process can be performed through an easy and cheap method at a low temperature compared to inter-metal welding because an inter-metal welding process that is used in a conventional direct-coupled terminal is omitted and inter-plastic welding between the terminal insulator and the cap insulator is used. Furthermore, a production cost for a secondary battery can be reduced because laser investment and equipment costs for inter-metal welding are reduced. According to embodiments of the present disclosure, a failure attributable to the occurrence of an alien substance, which is problematic in inter-metal welding, can be solved because an inter-metal welding process that is used in a conventional direct-coupled terminal is omitted. According to embodiments of the present disclosure, it is possible to prevent a dimensional change of a terminal and to sufficiently secure a welding pool because welding is performed along the welding groove formed at a portion at which the terminal insulator and the cap insulator adjoin each other.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate preferred embodiments of the present disclosure, and help to further understand the present disclosure along with the aforementioned contents of the disclosure. Accordingly, the present disclosure should not be construed as being limited to only contents described in such drawings:
FIG. 1A is an upper perspective view of a prismatic secondary battery.
FIG. 1B is a cross-sectional view taken along line I-I in FIG. 1A.
FIG. 2 is a diagram illustrating a conventional direct-coupled terminal.
FIG. 3 is a perspective view of a secondary battery including an integrated terminal according to embodiments of the present disclosure.
FIG. 4 is a cross-sectional view of the integrated terminal according to embodiments of the present disclosure.
FIG. 5 is a cross-sectional view illustrating a form in which the integrated terminal according to embodiments of the present disclosure is coupled.
FIG. 6 is a plan view of a cap plate before the cap plate is coupled to the case of the secondary battery including the integrated terminal according to embodiments of the present disclosure.
FIG. 7 is a plan view of the secondary battery including the integrated terminal according to embodiments of the present disclosure.
FIG. 8 is a diagram for describing a method of manufacturing the secondary battery including the integrated terminal according to embodiments of the present disclosure.
FIG. 9 is a cross-sectional view illustrating a first embodiment in which a welding groove is formed in the integrated terminal according to embodiments of the present disclosure.
FIG. 10 is a cross-sectional view illustrating a form in which the integrated terminal is coupled, in the first embodiment in which the welding groove is formed in the integrated terminal according to embodiments of the present disclosure.
FIG. 11 is a cross-sectional view illustrating a second embodiment in which a welding groove is formed in the integrated terminal according to embodiments of the present disclosure.
FIG. 12 is a cross-sectional view illustrating a form in which the integrated terminal is coupled, in the second embodiment in which the welding groove is formed in the integrated terminal according to embodiments of the present disclosure.

### DETAILED DESCRIPTION

Embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments. Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplified embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but it can also be indirectly "connected", "coupled", or "joined" to the other element with other elements interposed therebetween. As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about, " and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplified embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Examples of secondary batteries include a coin type, a cylindrical type, a prismatic type, and a pouch type. The present disclosure is applicable to a prismatic secondary battery. Therefore, the prismatic secondary battery will first be briefly described prior to description of embodiments of the present disclosure.

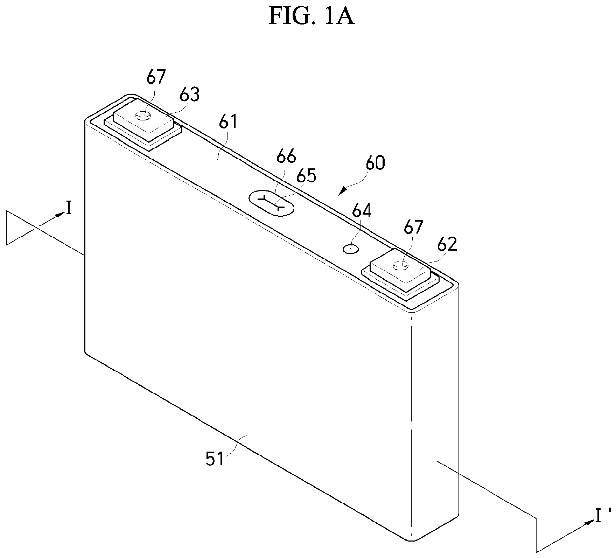

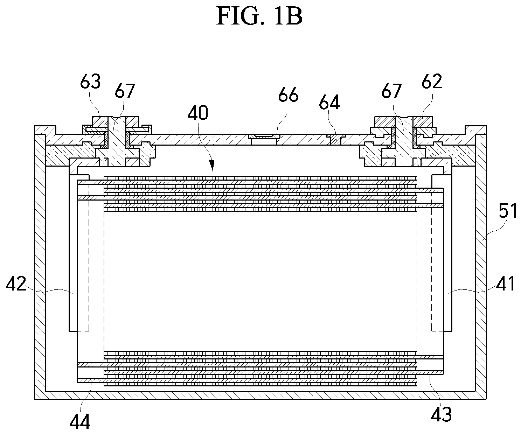

FIG. 1A is a top perspective view of the prismatic secondary battery. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminium, aluminium alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is used for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited to that described in the present disclosure. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to one another and accommodated in the casing, and the number of electrode assemblies is not limited to that described in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminium or aluminium alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40, as viewed from one perspective such as that shown in Fig. 1. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively. The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

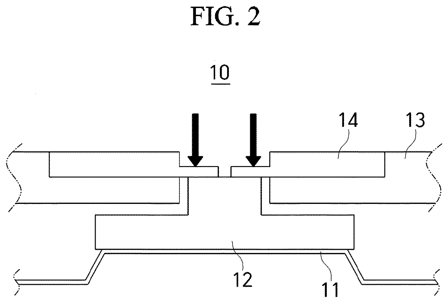

FIG. 2 is a diagram illustrating a conventional direct-coupled terminal.

Referring to FIG. 2, in the conventional direct-coupled terminal, a sub-plate 11 may be electrically connected to an electrode assembly. A current collector 12 may be disposed to adjoin the sub-plate 11 and electrically connected to the sub-plate 11. The bottom of a terminal plate 14 included in a cap plate 13 may come into contact with the top of the current collector 12. Welding may be performed in arrow directions in the state in which the terminal plate 14 and the current collector 12 come into contact with one another. In this circumstance, in order for the electrode assembly to be electrically connected to the cap plate 13 properly via the sub-plate 11 and the current collector 12, the welding needs to be performed in the state in which the terminal plate 14 and the current collector 12 are closely attached. If a degree of adhesion is reduced, various welding failures, such as a crack, a pinhole, undercut, and an insufficient welding depth, may occur. There is a good possibility that a cell failure, such as the occurrence of a leak or an increase of resistance, may occur because the sealing of a cell is broken. However, as illustrated in FIG. 2, the conventional direct-coupled terminal has a problem in that it is difficult to check whether the adhesion of the current collector 12 and the terminal plate 14 has been well performed on the outside after the terminal plate 14 is inserted because the terminal plate 14 is installed to cover the current collector 12.

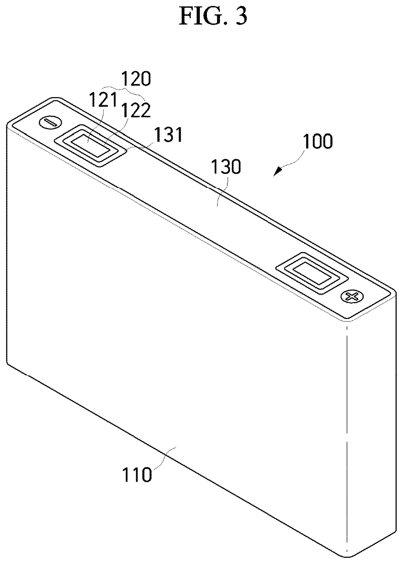

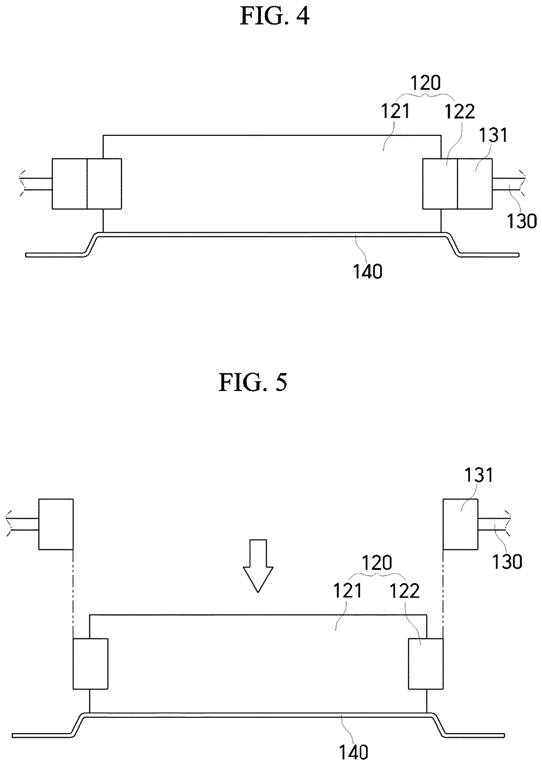

FIG. 3 is a perspective view of a secondary battery 100 including an integrated terminal according to embodiments of the present disclosure. FIG. 4 is a cross-sectional view of the integrated terminal according to embodiments of the present disclosure.

Referring to FIGs. 3 and 4, the secondary battery 100 including the integrated terminal according to embodiments of the present disclosure includes an electrode assembly (not illustrated), a case 110, an integrated terminal including a terminal assembly 120 and a cap insulator 131, and a cap plate 130.

The case 110 may have a side constructed to be capable of accommodating the electrode assembly or an electrolyte, an opening part on one side of the case, and a closing part on the other side, which is opposite to the one side. For example, the closing part may correspond to the cap plate 130. The closing part may have a relatively closing structure compared to the opening part, and may include a through hole, if necessary.

For example, the case 110 may have a quadrangular column shape in which one of both sides of the case is sealed and the other side is opened. Furthermore, in FIG. 3, the case has been illustrated as having a shape of a prismatic secondary battery, but the present disclosure is not limited thereto. The shape of the case may be different depending on the type of secondary battery.

The case 110 may be made of a material that is mainly used in the industry in order to protect internal parts of the secondary battery against an external impact or a fire. For example, in view of the purpose and function of the secondary battery, the case may be a metal case including aluminium, an aluminium alloy, steel plated with nickel, or stainless steel, a plastic case including GFRP, or a combination of them depending on the choice of a person in the industry.

The terminal assembly 120 includes a terminal member 121 that is disposed to adjoin a sub-plate 140 that is electrically connected to the electrode assembly of the secondary battery 100 and a terminal insulator 122 that surrounds the side of the terminal member 121. The terminal member 121 may be electrically connected to the electrode assembly through the sub-plate 140.

In embodiments, the terminal assembly 120 may include a first terminal assembly and a second terminal assembly. The first terminal assembly may be electrically connected to a positive electrode of the electrode assembly. The second terminal assembly may be electrically connected to a negative electrode of the electrode assembly. Alternatively, the first terminal assembly may be electrically connected to the negative electrode of the electrode assembly, and the second terminal assembly may be electrically connected to the positive electrode of the electrode assembly.

In embodiments, if the secondary battery according to embodiments of the present disclosure has a top terminal type in which both a positive electrode terminal and a negative electrode terminal are disposed at the top of the secondary battery, the first terminal assembly and the second terminal assembly may be disposed in the cap plate 130. Alternatively, if the secondary battery according to embodiments of the present disclosure has a side terminal type in which the positive electrode terminal and the negative electrode terminal are disposed on both sides of the secondary battery, the first terminal assembly may be disposed in the cap plate 130, and the second terminal assembly may be disposed in a cover plate (not illustrated) that is opposite to the cap plate 130.

The sub-plate 140 may be electrically connected to the electrode assembly. The sub-plate 140 may be coupled to at least one side of the electrode assembly, and may be electrically connected to a first electrode plate (e.g., a positive electrode plate) or second electrode plate (e.g., negative electrode plate) of the electrode assembly. Specifically, the sub-plate 140 may be coupled to a first electrode tab of the electrode assembly. For example, the first electrode tab may be bonded to the sub-plate 140 by welding.

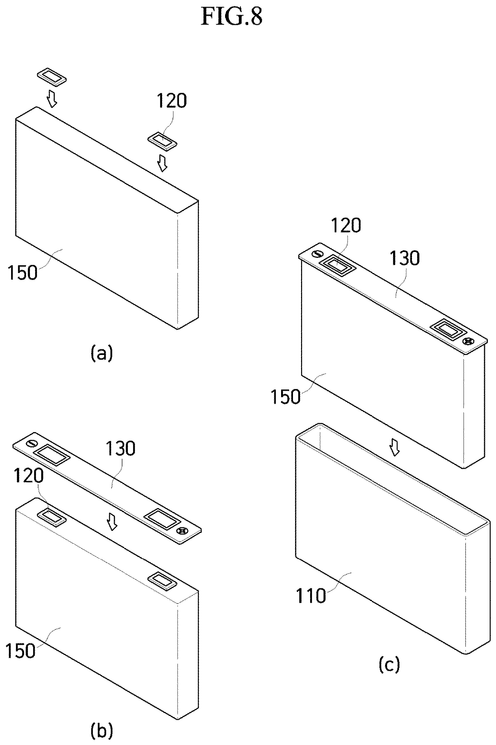

The cap plate 130 is coupled with the case 110. The cap plate 130 may have an approximately rectangular plate shape. The cap plate 130 may be made of the same material as the case 110. For example, the cap plate 130 may have a size corresponding to the size of the inside of the opening part of the case 110. Furthermore, exemplarily, the cap plate 130 may be coupled to the case 110 by a method, such as laser welding. An example of a process of coupling the cap plate 130 to the case 110 is described below in detail with reference to FIG. 8. An insulating member may be disposed between the cap plate 130 and the sub-plate 140. The insulating member can prevent the cap plate 130 and the sub-plate 140 from being electrically connected.

A through hole and a groove for coupling with the terminal assembly 120, an infusion hole, and a vent hole for vent coupling may be formed in the cap plate 130. A vent may be coupled to the vent hole of the cap plate 130. The vent may function to discharge a gas by being ruptured when pressure within the secondary battery rises, and may have a common vent structure. When the vent is ruptured, a gas may be discharged because a flow of the gas is formed from the inside of the secondary battery to the outside thereof. The through hole into which the terminal assembly 120 is inserted is formed in the cap plate 130. The cap plate 130 may include the cap insulator 131 that is formed along the through hole. The cap insulator 131 may be disposed along the circumference of the through hole of the cap plate 130. In embodiments, when the terminal assembly 120 is inserted into the through hole of the cap plate 130, the terminal insulator 122 and the cap insulator 131 may adjoin one another. Specifically, the cap insulator 131 and the terminal insulator 122 may be inserted between the cap plate 130 and the terminal member 121 so that the cap insulator 131 and the terminal insulator 122 are disposed to adjoin one another. The cap insulator 131 may be disposed on the part of the cap plate 130, and the terminal insulator 122 may be disposed on the part of the terminal member 121. Accordingly, the cap insulator 131 and the terminal insulator 122 can prevent the cap plate 130 and the terminal member 121 from being electrically connected.

FIG. 5 is a cross-sectional view illustrating a form in which the integrated terminal according to embodiments of the present disclosure is coupled.

FIG. 5 is a cross-sectional view of the terminal assembly 120 and the cap plate 130 before the integrated terminal is coupled, which is viewed from the side. The sub-plate 140 may be coupled to at least one side of the electrode assembly and electrically connected to the electrode assembly. The terminal assembly 120 includes the terminal member 121 that is disposed to adjoin the sub-plate 140 and the terminal insulator 122 that surrounds the side of the terminal member 120.

FIG. 5 illustrates a form before the integrated terminal is coupled. In contrast, FIG. 4 illustrates a form after the integrated terminal is coupled. As the terminal assembly 120 including the terminal member 121 and the terminal insulator 122 is inserted into the through hole of the cap plate 130, the terminal insulator 122 may come into contact with the cap insulator 131. The terminal insulator 122 and the cap insulator 131 may be bonded in the state in which the terminal insulator 122 and the cap insulator 131 have come into contact with one another.

After the integrated terminal is coupled, a part of the terminal member 121 of the terminal assembly 120 may be exposed to the outside of the cap plate 130 through the through hole. According to an embodiment, the top of the terminal insulator 122 may be disposed below the top of the terminal member 121, so that the terminal member 121 itself may have a structure in which the terminal member 121 can easily operate as the external electrode of the secondary battery.

In embodiments, the terminal insulator 122 and the cap insulator 131 may be bonded together by thermal fusion. For example, a welding process using laser or plasma may be performed for the bonding of the terminal insulator 122 and the cap insulator 131. A crush process using a press may be added to the welding process using laser or plasma. According to an embodiment, bonding between the terminal insulator 122 and the cap insulator 131 may be designed so that the bonding is maintained at more than vent critical pressure of the secondary battery. Accordingly, even after the terminal insulator 122 and the cap insulator 131 are bonded, the vent can correctly operate with respect to thermal runaway or the generation of a gas within the secondary battery.

According to embodiments of the present disclosure, a coupling part of the terminal insulator that surrounds the side of the terminal member and the cap insulator that is formed along the through hole of the cap plate may be exposed to the outside, and can prevent the occurrence of a welding failure attributable to a reduction of the adhesive force of a conventional direct-coupled terminal.

According to embodiments of the present disclosure, a bonding process can be performed through an easy and cheap method at a lower temperature compared to inter-metal welding because an inter-metal welding process that is used in a conventional direct-coupled terminal is omitted and inter-plastic welding between the terminal insulator and the cap insulator is used. Furthermore, a production cost for the secondary battery can be reduced because laser investment and equipment costs for inter-metal welding are reduced.

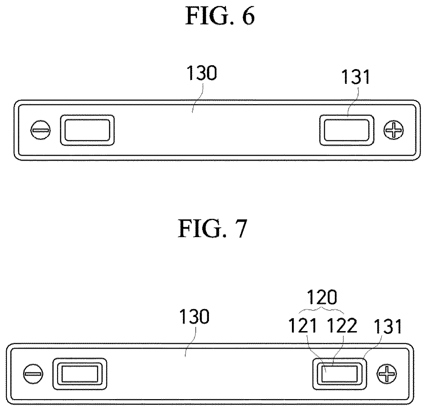

According to embodiments of the present disclosure, a failure attributable to the occurrence of an alien substance, which is problematic in inter-metal welding, can be solved because an inter-metal welding process that is used in a conventional direct-coupled terminal is omitted. FIG. 6 is a plan view of the cap plate before the cap plate is coupled to the case of the secondary battery including the integrated terminal according to embodiments of the present disclosure. FIG. 7 is a plan view of the secondary battery including the integrated terminal according to embodiments of the present disclosure.

FIG. 6 illustrates a form of the cap plate 130 before the cap plate is coupled to the case of the secondary battery including the integrated terminal, which is viewed from the top. At least one through hole may be formed in the cap plate 130. The cap insulator 131 may be disposed along the circumference of the through hole. As illustrated in FIG. 6, the edge of the through hole may have a round quadrangular shape, but the present disclosure is not limited thereto. The edge of the through hole may be variously designed and changed depending on the type and use of a secondary battery. Furthermore, as illustrated in FIG. 6, the through hole is plural in number, but only one through hole may be formed in the cap plate 130 depending on the type and use of a secondary battery.

In embodiments, the cap insulator 131 may be an insulator that is disposed along the circumference of the through hole while maintaining a specific range from the edge of the through hole. Specifically, the cap insulator 131 may have a certain width from the edge of the through hole and may be disposed along the circumference of the through hole. A shape of the cap insulator 131 may be changed to correspond to that of the terminal assembly 120 that is inserted into the through hole.

The cap insulator 131 may be made of any one of polypropylene (PP), polyethylene (PE), polyvinyl chloride (PVC), urethane, nylon, and Teflon, that is, insulating materials. However, the material for the cap insulator 131 according to embodiments of the present disclosure is not limited to the above materials, and may include various substances as substances having electrical insulation properties.

In embodiments, the cap insulator 131 may be formed in the cap plate 130 through insert-molding. In this case, the insert-molding may denote a molding process method of processing a raw material by injecting the raw material into a mold in the state in which an insert (e.g., an external element or an accessory) is disposed within the mold in order to improve the strength, functionality, and external appearance of a part.

For example, the cap insulator 131 may be formed through a process of injecting an insulating raw material that constitutes the cap insulator 131 while using, as an insert, the cap plate 130 made of a metal material in a molding corresponding to the through hole. The cap insulator 131 can be firmly fixed to the cap plate 130 and the strength and durability of the entire product can be improved, through such an insert-molding process. The entire productivity can be improved because a conventional assembly process including multiple steps can be avoided.

FIG. 7 illustrates a form of the cap plate 130 after the cap plate is coupled to the case of the secondary battery including the integrated terminal, which is viewed from the top. Specifically, the electrode assembly may be inserted into the case so that the terminal assembly 120 electrically connected to the electrode assembly is inserted into one or more through holes formed in the cap plate 130.

The terminal assembly 120 includes the terminal member 121 and the terminal insulator 122. The terminal insulator 122 surrounds the side of the terminal member 121. As illustrated in FIG. 7, the edge of the terminal member 121 may have a round quadrangular shape, but the present disclosure is not limited thereto. The edge of the terminal member 121 may be variously designed and changed depending on the type and use of a secondary battery. Furthermore, as illustrated in FIG. 7, the terminal member 121 coupled to the cap plate 130 is plural in number, but may be one in number depending on the construction and type of a secondary battery.

In embodiments, the terminal insulator 122 may be disposed along the circumference of the terminal member 121 while maintaining a width with a specific range from the edge of the circumference of the side of the terminal member 121. Specifically, the terminal insulator 122 may have the same width from a boundary surface of the terminal member 121, and may be disposed along the circumference of the terminal member 121. A shape of the terminal insulator 122 may be changed to correspond to a shape of the cap insulator 131 that is disposed in the through hole.

The terminal insulator 122 may be made of any one of polypropylene (PP), polyethylene (PE), polyvinyl chloride (PVC), urethane, nylon, and Teflon, that is, insulating materials. However, the material for the terminal insulator 122 according to embodiments of the present disclosure is not limited to the above materials, and may include various substances, that is, substances having electrical insulation properties.

According to an embodiment, the terminal insulator 122 may be formed in the terminal member 121 through insert-molding. For example, the terminal insulator 122 may be formed through a process of injecting an insulating raw material that constitutes the terminal insulator 122 while using, as an insert, the terminal member 121 made of a metal material in a molding corresponding to the through hole. The terminal insulator 122 can be firmly fixed to the terminal member 121 and the strength and durability of the entire product can be improved, through such an insert-molding process. The entire productivity can be improved because a conventional assembly process including multiple steps can be avoided.

According to an embodiment, the cap insulator 131 may come into contact with the entire circumference of the terminal insulator 122. The cap insulator 131 may be bonded to the terminal insulator 122 in the state in which the cap insulator 131 has come into contact with the entire circumference of the terminal insulator 122, so that the through hole of the cap plate 130 can be sealed. A detailed method of bonding the cap insulator 131 to the terminal insulator 122 is described with reference to FIGs. 8 to 12. FIG. 8 is a diagram for describing a method of manufacturing the secondary battery including the integrated terminal according to embodiments of the present disclosure. Referring to FIG. 8, in the method of manufacturing the secondary battery including the integrated terminal according to embodiments of the present disclosure, first, the electrode assembly is manufactured. The terminal assembly including the terminal member and the terminal insulator that surrounds the side of the terminal member is manufactured. The cap plate in which the through hole into which the terminal assembly is inserted is formed and which includes the cap insulator that is formed along the through hole is manufactured.

Furthermore, as in step (a) of FIG. 8, the terminal assembly 120 may be coupled to the electrode assembly 150.

Next, as in step (b) of FIG. 8, the terminal assembly 120 coupled to the electrode assembly 150 is inserted into the through hole formed in the cap plate 130 so that the terminal insulator and the cap insulator 131 adjoin each other. Thereafter, the cap insulator 131 that is disposed along the circumference of the through hole may be bonded to the terminal insulator of the terminal assembly 120. Thereafter, as in step (c) of FIG. 8, the cap plate 130 may be coupled to the case 110 that accommodates the electrode assembly 150. In embodiments, the case 110 may have a quadrangular column shape in which one of both sides of the case is sealed and the other side is opened. Furthermore, in FIG. 8, the case 110 has been illustrated as having a shape of a prismatic secondary battery, but the present disclosure is not limited thereto. The shape of the case may be different depending on the type of secondary battery. Accordingly, the opening part of the case has been illustrated as the top of the case, but the present disclosure is not limited thereto. In contrast, the opening part of the case may be formed in one arbitrary surface of the case 110.

The secondary battery that is manufactured by the manufacturing method according to embodiments of the present disclosure may be applied to vehicles, mobile phones and/or various types of electric devices.

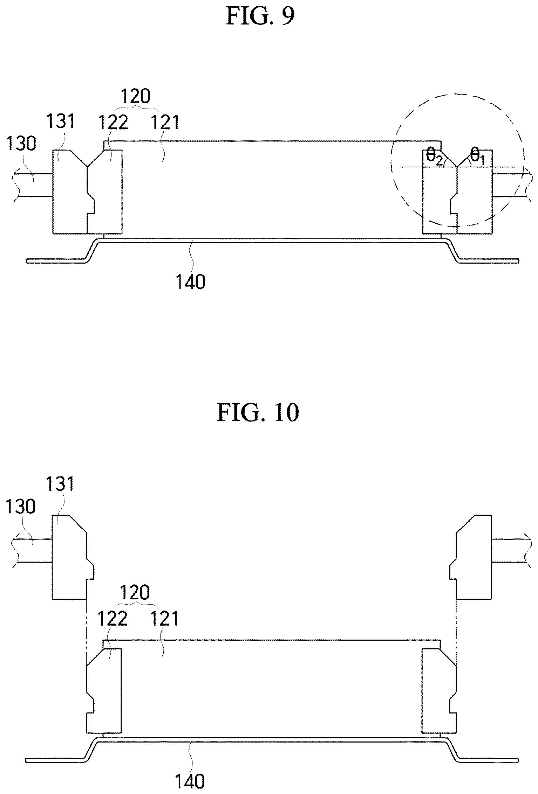

In embodiments, in the integrated terminal according to embodiments of the present disclosure, a welding groove may be formed in a portion at which the terminal insulator 122 and the cap insulator 131 adjoin each other. Embodiments of the welding groove are described below with reference to FIGs. 9 to 12.

FIG. 9 is a cross-sectional view illustrating a first embodiment in which a welding groove is formed in the integrated terminal according to embodiments of the present disclosure. FIG. 10 is a cross-sectional view illustrating a form in which the integrated terminal is coupled, in the first embodiment in which the welding groove is formed in the integrated terminal according to embodiments of the present disclosure.

Referring to FIGs. 9 and 10, in the integrated terminal according to embodiments of the present disclosure, the welding groove is formed at a portion at which the terminal insulator 122 and the cap insulator 131 adjoin each other. The terminal insulator 122 and the cap insulator 131 are welded and coupled along the welding groove.

As described above, in the integrated terminal according to embodiments of the present disclosure, when the terminal assembly 120 is inserted into the through hole of the cap plate 130, the terminal insulator 122 and the cap insulator 131 adjoin one another, and may be bonded together by thermal fusion in the state in which the terminal insulator 122 and the cap insulator 131 have adjoined each other. When welding is performed on the portion at which the terminal insulator 122 and the cap insulator 131 adjoin one another, welding beads may be generated. If a portion on which welding is performed is flat as illustrated in FIG. 3, the height of the welding beads that are generated after the welding may be greater than the height of the terminal insulator 122 and the cap insulator 131. In this circumstance, the height of the welding beads may be greater than a desired dimensional range of the size of the terminal. Furthermore, when a battery module or a battery pack is manufactured, the welding beads may invade the region of another part, such as the case, and may influence a flow of a current or block a flow of a gas that is discharged when the vent is ruptured or may influence the assemblability of the battery module or the battery pack.

Accordingly, as illustrated in FIG. 9, if the welding groove is formed in the portion at which the terminal insulator 122 and the cap insulator 131 adjoin each other, the welding beads can be prevented from being greater than the height of the terminal insulator 122 and the cap insulator 131 because a welding pool in which the welding beads are generated may be secured even after the welding and the welding beads are formed along the welding groove. In embodiments, the welding groove may be formed along the entire portion at which the terminal insulator 122 and the cap insulator 131 adjoin one another.

FIG. 9 illustrates an embodiment in a circumstance in which the welding groove has a V shape in the integrated terminal. In embodiments, the V shape of the welding groove may be formed to adjoin the terminal insulator 122 and the cap insulator 131 by forming a slope in one surface of at least one of the terminal insulator 122 and the cap insulator 131. As illustrated in FIG. 9, the V shape of the welding groove may be formed by forming the slope in one surface of each of the terminal insulator 122 and the cap insulator 131. The V shape of the welding groove may be formed by forming the slope in one surface of any one of the terminal insulator 122 and the cap insulator 131. In embodiments, the slope that is formed in one surface of at least one of the terminal insulator 122 and the cap insulator 131 may be formed by peeling the corresponding surface and may be formed when a corresponding insulator is molded.

Angles θ₁ and θ₂ of the slopes of the terminal insulator 122 and the cap insulator 131 at which the welding groove forms the V shape may be adjusted, if necessary. The angles θ₁ and θ₂ of the slopes may be determined by the height of the welding beads as the results of the execution of actual welding.

In embodiments, a protrusion portion may be formed in the side of the cap insulator 131. A recessed portion corresponding to the protrusion portion may be formed in the side of the terminal insulator 122 that adjoins the side of the cap insulator 131 in which the protrusion portion has been formed. As illustrated in FIG. 10, the protrusion portion and the recessed portion may be fastened so that the terminal insulator 122 and the cap insulator 131 are coupled. Accordingly, vertical and horizontal fastening forces between the terminal insulator 122 and the cap insulator 131 can be increased. In embodiments, the protrusion portion of the side of the cap insulator 131 may have a hook shape in order to further increase the fastening forces.

FIGs. 9 and 10 illustrate examples in which the protrusion portion is formed in the side of the cap insulator 131 and the recessed portion is formed in the side of the terminal insulator 122. In contrast, the protrusion portion may be formed in the side of the terminal insulator 122, and the recessed portion may be formed in the side of the cap insulator 131.

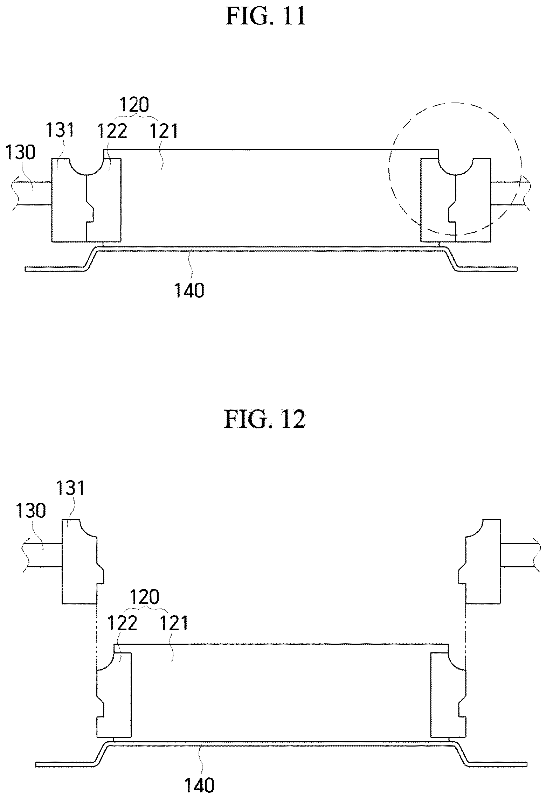

FIG. 11 is a cross-sectional view illustrating a second embodiment in which a welding groove is formed in the integrated terminal according to embodiments of the present disclosure. FIG. 12 is a cross-sectional view illustrating a form in which the integrated terminal is coupled, in the second embodiment in which the welding groove is formed in the integrated terminal according to embodiments of the present disclosure.

FIG. 11 illustrates an embodiment in a circumstance in which the welding groove has a U shape in the integrated terminal. In embodiments, the U shape of the welding groove may be formed to adjoin the terminal insulator 122 and the cap insulator 131 by forming a concave surface in one surface of at least one of the terminal insulator 122 and the cap insulator 131. As illustrated in FIG. 11, the U shape of the welding groove may be formed by forming the concave surface in one surface of each of the terminal insulator 122 and the cap insulator 131. The U shape of the welding groove may be formed by forming the concave surface in one surface of any one of the terminal insulator 122 and the cap insulator 131. In embodiments, the concave surface that is formed in one surface of at least one of the terminal insulator 122 and the cap insulator 131 may be formed by peeling the corresponding surface, and may be formed when a corresponding insulator is molded.

In embodiments, a protrusion portion may be formed in the side of the cap insulator 131. A recessed portion corresponding to the protrusion portion may be formed in the side of the terminal insulator 122 that adjoins the side of the cap insulator 131 in which the protrusion portion has been formed. As illustrated in FIG. 12, the protrusion portion and the recessed portion may be fastened so that the terminal insulator 122 and the cap insulator 131 are coupled. Accordingly, vertical and horizontal fastening forces between the terminal insulator 122 and the cap insulator 131 can be increased. In embodiments, the protrusion portion of the side of the cap insulator 131 may have a hook shape in order to further increase the fastening forces.

FIGs. 11 and 12 illustrate examples in which the protrusion portion is formed in the side of the cap insulator 131 and the recessed portion is formed in the side of the terminal insulator 122. In contrast, the protrusion portion may be formed in the side of the terminal insulator 122, and the recessed portion may be formed in the side of the cap insulator 131.

Hereinafter, any material that is usable for the secondary battery according to the present disclosure will be described.

A compound capable of reversibly intercalating/deintercalating lithium (e.g., lithiated intercalation compound) may used as the positive electrode active material. Specifically, one or more of composite oxides of lithium and metal selected from the group consisting of cobalt, manganese, nickel, and combinations thereof may be used.

Examples of the composite oxides may include a lithium transition metal composite oxide, such as a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0 < α < 2) ; LiₐNi_{2-b-c}Mn_{b}X_{c}O_{2-α}D_{α} (0.90 ≤ a ≤ 1.8, 0 ≤ b ≤ 0.5, 0 ≤ c ≤ 0.5, 0 < α < 2); LiₐNi_{b}Co_{c}L1_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1) ; LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8).

In the above formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L1 is Mn, Al, or a combination thereof.

A positive electrode for lithium secondary batteries may include a current collector and a positive electrode active material layer formed on the current collector. The positive electrode active material layer may include a positive electrode active material and may further include a binder and/or a conductive material.

The positive electrode active material may be contained in an amount of about 90 wt % to about 99.5 wt % on the basis of 100 wt % of the positive electrode active material layer. The binder and the conductive material may each be contained in an amount of about 0.5 wt % to about 5 wt % on the basis of 100 wt % of the positive electrode active material layer. The current collector may be made of aluminium (Al), but the present disclosure is not limited thereto.

The negative electrode active material may include a material capable of reversibly intercalating/deintercalating lithium ions, a lithium metal, an alloy of lithium metal, a material capable of being doped and undoped in lithium, or a transition metal oxide. Examples of the material capable of reversibly intercalating/deintercalating lithium ions may include a carbon-based negative electrode active material, such as crystalline carbon, amorphous carbon, or a combination thereof. Examples of the crystalline carbon may include graphite, such as natural graphite or artificial graphite. Examples of the amorphous carbon may include soft carbon or hard carbon, meso-phase pitch carbide, and calcined coke.

A Si-based negative electrode active material or a Sn-based negative electrode active material may be used as the material capable of being doped and undoped in lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to an implementation, the silicon-carbon composite may be in the form of silicon particles and amorphous carbon coated on the surface of the silicon particles.

The silicon-carbon composite may further include crystalline carbon. For example, the silicon-carbon composite may include a core containing crystalline carbon and silicon particles and an amorphous carbon coating layer on the surface of the core.

A negative electrode for lithium secondary batteries may include a current collector and a negative electrode active material layer formed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

The binder may be a non-aqueous binder, an aqueous binder, a dry binder, or a combination thereof. When the aqueous binder is used as the negative electrode binder, it may further include a cellulose-based compound capable of imparting viscosity.

The negative electrode current collector may be selected from the group consisting of copper foil, nickel foil, stainless steel foil, titanium foil, nickel foam, copper foam, a polymer substrate coated with conductive metal, and combinations thereof.

An electrolyte for lithium secondary batteries may include a non-aqueous organic solvent and a lithium salt.

The non-aqueous organic solvent acts as a medium through which ions involved in the electrochemical reaction of the battery are able to migrate.

The non-aqueous organic solvent may be a carbonate-based, ester-based, ether-based, ketone-based, or alcohol-based solvent, an aprotic solvent, or a combination thereof, and may be used alone or in combination of two or more.

When the carbonate-based solvent is used as the non-aqueous organic solvent, a mixture of cyclic carbonate and chain carbonate may be used.

Depending on the type of lithium secondary battery, a separator may be present between the positive electrode and the negative electrode. The separator may be a polyethylene film, a polypropylene film, a polyvinylidene fluoride film, or a multilayer film of two or more layers thereof.

The separator may include a porous substrate, and a coating layer containing an organic material, an inorganic material, or a combination thereof on one or both surfaces of the porous substrate.

The organic material may include a polyvinylidene fluoride-based polymer or a (meth)acrylic-based polymer.

The inorganic material may include inorganic particles selected from the group consisting of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but the present disclosure is not limited thereto.

The organic material and the inorganic material may be mixed in one coating layer or may be in the form of a coating layer containing an organic material and a coating layer containing an inorganic material that are laminated on each other.

Although the present disclosure has been described above with respect to embodiments thereof, the present disclosure is not limited thereto. Various modifications and variations can be made by those skilled in the art within the present disclosure and the scope of equivalence of the appended claims.

### <DESCRIPTION OF REFERENCE SYMBOLS>

| | | | |
|---|---|---|---|
| 100: | secondary battery | 110: | case |
| 120: | terminal assembly | 121: | terminal member |
| 122: | terminal insulator | 130: | cap plate |
| 131: | cap insulator | 140: | sub-plate |
| 150: | electrode assembly | | |

Embodiments are set out in the following clauses.

Clause 1. An integrated terminal comprising:
a terminal assembly comprising a terminal member that is disposed to adjoin a sub-plate electrically connected to an electrode assembly of a secondary battery and a terminal insulator that surrounds a side of the terminal member; and
a cap insulator formed along a through hole in a cap plate that is coupled to a case that accommodates the electrode assembly and in which the through hole into which the terminal assembly is inserted has been formed,
wherein when the terminal assembly is inserted into the through hole, the terminal insulator and the cap insulator adjoin one another, and
a welding groove is formed in a portion at which the terminal insulator and the cap insulator adjoin one another, and the terminal insulator and the cap insulator are welded and coupled along the welding groove.

Clause 2. The integrated terminal according to clause 1, wherein the welding groove is formed along an entire portion at which the terminal insulator and the cap insulator adjoin one another.

Clause 3. The integrated terminal according to clause 1 or clause 2, wherein the welding groove has a V shape.

Clause 4. The integrated terminal according to clause 3, wherein the V shape of the welding groove is formed to adjoin the terminal insulator and the cap insulator by forming a slope in one surface of at least one of the terminal insulator and the cap insulator.

Clause 5. The integrated terminal according to clause 1 or clause 2, wherein the welding groove has a U shape.

Clause 6. The integrated terminal according to any one of clauses 1 to 5, wherein:
a protrusion portion is formed in a side of the cap insulator, and
a recessed portion corresponding to the protrusion portion is formed in a side of the terminal insulator that adjoins the side of the cap insulator in which the protrusion portion has been formed.

Clause 7. The integrated terminal according to clause 6, wherein the protrusion portion has a hook shape.

Clause 8. The integrated terminal according to any one of clauses 1 to 7, wherein the cap insulator is formed in the cap plate through insert-molding.

Clause 9. The integrated terminal according to any one of clauses 1 to 8, wherein the terminal insulator is formed in the terminal member through insert-molding.

Clause 10. A secondary battery comprising:
an electrode assembly;
a case configured to accommodate the electrode assembly;
a terminal assembly comprising a terminal member that is disposed to adjoin a sub-plate electrically connected to the electrode assembly and a terminal insulator that surrounds a side of the terminal member;
a cap plate that is coupled to the case and in which a through hole into which the terminal assembly is inserted is formed; and
a cap insulator formed along the through hole,
wherein when the terminal assembly is inserted into the through hole, the terminal insulator and the cap insulator adjoin one another, and
a welding groove is formed in a portion at which the terminal insulator and the cap insulator adjoin one another, and the terminal insulator and the cap insulator are welded and coupled along the welding groove.

Clause 11. The secondary battery according to clause 10, wherein the welding groove is formed along an entire portion at which the terminal insulator and the cap insulator adjoin one another.

Clause 12. The secondary battery according to clause 10 or clause 11, wherein the welding groove has a V shape.

Clause 13. The secondary battery according to clause 12, wherein the V shape of the welding groove is formed to adjoin the terminal insulator and the cap insulator by forming a slope in one surface of at least one of the terminal insulator and the cap insulator.

Clause 14. The secondary battery according to any one of clauses 10 to 13, wherein the welding groove has a U shape. Clause 15. The secondary battery according to any one of clauses 10 to 14, wherein:
a protrusion portion is formed in a side of the cap insulator, and
a recessed portion corresponding to the protrusion portion is formed in a side of the terminal insulator that adjoins the side of the cap insulator in which the protrusion portion has been formed.

Clause 16. The secondary battery according to clause 15, wherein the protrusion portion has a hook shape.

Clause 17. The secondary battery according to any one of clauses 10 to 16, wherein:
the terminal assembly comprises a first terminal assembly and a second terminal assembly, and
the first terminal assembly and the second terminal assembly are disposed in the cap plate.

Clause 18. The secondary battery according to any one of clauses 10 to 17, wherein:
the terminal assembly comprises a first terminal assembly and a second terminal assembly, and
the first terminal assembly is disposed in the cap plate, and the second terminal assembly is disposed in the cap plate disposed to be opposite to the cap plate.

Clause 19. A method of manufacturing a secondary battery, the method comprising:
manufacturing an electrode assembly;
manufacturing a terminal assembly comprising a terminal member that is disposed to adjoin a sub-plate electrically connected to the electrode assembly and a terminal insulator that surrounds a side of the terminal member;
manufacturing a cap plate in which a through hole into which the terminal assembly is inserted is formed and which comprises a cap insulator formed along the through hole;
inserting the terminal assembly into the through hole so that the terminal insulator and the cap insulator adjoin each other; and
performing welding along a welding groove formed in a portion at which the terminal insulator and the cap insulator adjoin one another so that the terminal insulator and the cap insulator are coupled.

Clause 20. The method according to clause 19, further comprising coupling the cap plate to a case that accommodates the electrode assembly.

## Claims

1. An integrated terminal comprising:
a terminal assembly comprising a terminal member that is disposed to adjoin a sub-plate electrically connected to an electrode assembly of a secondary battery and a terminal insulator that surrounds a side of the terminal member; and
a cap insulator formed along a through hole in a cap plate that is coupled to a case that accommodates the electrode assembly and in which the through hole into which the terminal assembly is inserted is formed,
wherein the terminal assembly is inserted into the through hole such that the terminal insulator and the cap insulator adjoin one another, and
a welding groove is formed in a portion at which the terminal insulator and the cap insulator adjoin one another, and the terminal insulator and the cap insulator are welded and coupled along the welding groove.

2. The integrated terminal as claimed in claim 1, wherein the welding groove is formed along an entire portion at which the terminal insulator and the cap insulator adjoin one another.

3. The integrated terminal as claimed in claim 1 or claim 2, wherein the welding groove has a V shape, optionally wherein the V shape of the welding groove is formed to adjoin the terminal insulator and the cap insulator by forming a slope in one surface of at least one of the terminal insulator and the cap insulator.

4. The integrated terminal as claimed in claim 1 or claim 2, wherein the welding groove has a U shape.

5. The integrated terminal as claimed in any one of claims 1 to 4, wherein:
a protrusion portion is formed in a side of the cap insulator, and
a recessed portion corresponding to the protrusion portion is formed in a side of the terminal insulator that adjoins the side of the cap insulator in which the protrusion portion has been formed, optionally wherein the protrusion portion has a hook shape.

6. The integrated terminal as claimed in any one of claims 1 to 5, wherein the cap insulator is formed in the cap plate through insert-molding.

7. The integrated terminal as claimed in any one of claims 1 to 6, wherein the terminal insulator is formed in the terminal member through insert-molding.

8. A secondary battery comprising:
an electrode assembly;
a case configured to accommodate the electrode assembly;
a terminal assembly comprising a terminal member that is disposed to adjoin a sub-plate electrically connected to the electrode assembly and a terminal insulator that surrounds a side of the terminal member;
a cap plate that is coupled to the case and in which a through hole into which the terminal assembly is inserted is formed; and
a cap insulator formed along the through hole,
wherein the terminal assembly is inserted into the through hole such that the terminal insulator and the cap insulator adjoin one another, and
a welding groove is formed in a portion at which the terminal insulator and the cap insulator adjoin one another, and the terminal insulator and the cap insulator are welded and coupled along the welding groove.

9. The secondary battery as claimed in claim 8, wherein the welding groove is formed along an entire portion at which the terminal insulator and the cap insulator adjoin one another.

10. The secondary battery as claimed in claim 8 or claim 9, wherein the welding groove has a V shape, optionally wherein the V shape of the welding groove is formed to adjoin the terminal insulator and the cap insulator by forming a slope in one surface of at least one of the terminal insulator and the cap insulator.

11. The secondary battery as claimed in claim 8 or claim 9, wherein the welding groove has a U shape.

12. The secondary battery as claimed in any one of claims 8 to 11, wherein:
a protrusion portion is formed in a side of the cap insulator, and
a recessed portion corresponding to the protrusion portion is formed in a side of the terminal insulator that adjoins the side of the cap insulator in which the protrusion portion has been formed, optionally wherein the protrusion portion has a hook shape.

13. The secondary battery as claimed in any one of claims 8 to 12, wherein:
the terminal assembly comprises a first terminal assembly and a second terminal assembly, and
the first terminal assembly and the second terminal assembly are disposed in the cap plate.

14. The secondary battery as claimed in any one of claims 8 to 12, wherein:
the terminal assembly comprises a first terminal assembly and a second terminal assembly, and
the first terminal assembly is disposed in the cap plate, and the second terminal assembly is disposed in the cap plate disposed to be opposite to the cap plate.

15. A method of manufacturing a secondary battery, the method comprising:
manufacturing an electrode assembly;
manufacturing a terminal assembly comprising a terminal member that is disposed to adjoin a sub-plate electrically connected to the electrode assembly and a terminal insulator that surrounds a side of the terminal member;
manufacturing a cap plate in which a through hole into which the terminal assembly is inserted is formed and which comprises a cap insulator formed along the through hole;
inserting the terminal assembly into the through hole so that the terminal insulator and the cap insulator adjoin each other; and
performing welding along a welding groove formed in a portion at which the terminal insulator and the cap insulator adjoin one another so that the terminal insulator and the cap insulator are coupled, optionally wherein the method further comprises coupling the cap plate to a case that accommodates the electrode assembly.
